# EUROPEAN PATENT APPLICATION

(11) **EP 4 714 930 A1**
(43) Date of publication of application: **25.03.2026**
(21) Application number: 24806827.2
(22) Date of filing: 16.02.2024
(51) Int. Cl.: C05F 3/00, C03B 19/06, C03B 19/08

(54) **PLANT GROWTH MATERIAL AND PRODUCTION METHOD FOR SAME**

(30) Priority: 17.05.2023 JP 2023081682
(71) Applicant: ACT Silica Co.,Ltd., Naha city, Okinawa 901-0153 (JP)
(72) Inventor: MINEI Masatake, Naha city, Okinawa 9010153 (JP)
(74) Representative: J A Kemp LLP
(86) International application number: PCT/JP2024/005431
(87) International publication number: WO 2024/236872

(57) **Abstract**

[Problem] Provided are: a plant growth material that, without any separately provided fertilizer, has an effect for developing and growing a plant and increasing the yield of the plant, has higher safety, and has extremely less smell; and a method of producing the plant growth material.

[Solution] A method of producing a plant growth material according to the present invention is characterized by being a method of producing a plant growth material including: a light porous foamed material obtained by sintering and foaming soda-lime glass; and a fertilizer composed of chicken manure, cow manure, swine manure, or another kind of livestock manure; the method including: mixing the fertilizer and the light porous foamed material at a volume ratio of 10:90 to 90: 10; and heating the light porous foamed material mixed with the fertilizer at a high temperature of 200 to 900°C to soften the light porous foamed material and to allow the fertilizer to be supported in the light porous foamed material softened.

## Description

### Technical Field

The present invention relates to: a plant growth material produced by mixing a fertilizer composed of chicken manure, cow manure, swine manure, or another kind of livestock manure with a light porous foamed material that is sintered-and-foamed soda-lime glass, and heating the resulting mixture at high temperature: and a method of producing the plant growth material.

### Background Art

Patent Literature 1 has already disclosed that a light porous foamed material of sintered-and-foamed soda-lime glass promotes the growth of a monocotyledon, and has the effect of increasing the yield of the seeds or fruits of the monocotyledon, typically a cereal such as rice, wheat, or corn.

This Patent Literature 1 describes the discoveries that, in the cultivation of a Poaceae plant, the yield of the cereal is significantly increased by growing the plant in a soil fertilized with a material fired-and-foamed using waste glass as a raw material, and that the material fired-and-foamed using waste glass as a raw material can elute and provide silicon in the form of metasilicate ions (SiO32-) stably over a long period of time. The Patent Literature discloses a fertilizer that contains a vitreous foamed fired product, and has a noticeable effect on the growth of rice and on an increase in the yield of the cereal.

The vitreous foamed fired product according to Patent Literature 1 elutes silicon in the form of metasilicate ions (SiO32-) stably in a soil fertilized with the vitreous foamed fired product, and has a noticeable effect on the growth of rice and on an increase in the yield of the cereal, but does not abundantly contain any of nitrogen (N), phosphoric acid (P), and potassium (K) that are necessary for the development and growth of a plant.

Accordingly, the vitreous foamed fired product according to Patent Literature 1, if used singly, does not enable a Poaceae plant to develop and grow. Thus, nitrogen (N), phosphoric acid (P), and potassium (K), besides the vitreous foamed fired product, need to be provided as fertilizers.

As fertilizers containing nitrogen (N), phosphoric acid (P), and potassium (K) abundantly, chicken manure, cow manure, swine manure, and another kind of livestock manure are conventionally known.

However, these fertilizers have a peculiar smell, having problems in that, as a matter of course, a soil fertilized with such a fertilizer smells, and also that the smell drifts around the soil, thus harming the surrounding environment.

There is also a problem in that, after being fertilized, the soil smells further strongly, for example, if wetted with rainwater.

### Citation List

### Patent Literature

Patent Literature 1: WO2020/129222

### Summary of Invention

### Technical Problem

In view of this, an issue addressed by the present inventor to solve the above-described problems is to provide: a plant growth material that, without any separately provided fertilizer, has an effect for developing and growing a plant and increasing the yield of the plant, has higher safety, and has extremely less smell; and a method of producing the plant growth material.

### Solution to Problem

A plant growth material according to the present invention is characterized by being a plant growth material including:
a light porous foamed material obtained by sintering and foaming soda-lime glass; and
a fertilizer composed of chicken manure, cow manure, swine manure, or another kind of livestock manure;
wherein the fertilizer is supported in the light porous foamed material softened by heating at high temperature.

A plant growth material according to the present invention is characterized by being a plant growth material including:
a light porous foamed material obtained by sintering and foaming soda-lime glass; and
a fertilizer composed of chicken manure, cow manure, swine manure, or another kind of livestock manure;
wherein the fertilizer is supported in the light porous foamed material softened by heating at a high temperature of 200 to 900°C.

A method of producing a plant growth material according to the present invention is characterized by being a method of producing a plant growth material including:
a light porous foamed material obtained by sintering and foaming soda-lime glass; and
a fertilizer composed of chicken manure, cow manure, swine manure, or another kind of livestock manure;
the method including:
   mixing the fertilizer and the light porous foamed material at a volume ratio of 10:90 to 90: 10; and
   heating the light porous foamed material mixed with the fertilizer at a high temperature of 200 to 900°C to soften the light porous foamed material and to allow the fertilizer to be supported in the light porous foamed material softened.

### Advantageous Effects of Invention

(1) Over a long period of time, the fertilizer components are stably eluted together with silicon in the form of metasilicate ions (SiO32-), making it possible to have a valid effect on the development and growth of a plant and on an increase in the yield of the plant.
(2) Even if the plant growth material is placed into water or wetted with rainwater, the fertilizer that is composed of chicken manure, cow manure, swine manure, or another kind of livestock manure, and is mixed in and heated does not flow out. In addition, a smell peculiar to the fertilizer is generated neither from the plant growth material itself, as a matter of course, nor from a soil fertilized with the plant growth material.
(3) It is possible to provide: a plant growth material that, without any separately provided fertilizer, has an effect for developing and growing a plant and increasing the yield of the plant, has higher safety, and has extremely less smell; and a method of producing the plant growth material.

### Brief Description of Drawings

[FIG. 1] FIG. 1 is a photograph taken of a plant growth material in a first Example, in which the plant growth material was a light porous foamed material that was mixed with a fertilizer, and heated at high temperature.
[FIG. 2] FIG. 2 is a photograph taken of a plant growth material in a second Example, in which the plant growth material was a light porous foamed material that was mixed with a fertilizer, and heated at high temperature.
[FIG. 3] FIG. 3 is a photograph taken of a plant growth material in a third Example, in which the plant growth material was a light porous foamed material that was mixed with a fertilizer, and heated at high temperature.

### Description of Embodiments

A specific embodiment of the present invention will be described in detail with reference to the drawings.

A plant growth material according to the present invention can be produced with the following: a light porous foamed material that is sintered-and-foamed soda-lime glass; and a fertilizer composed of chicken manure, cow manure, swine manure, or another kind of livestock manure.

The soda-lime glass that can be used is waste glass that is, for example, any of plate glass, glass bottle, and window glass that are no longer utilized as such.

The light porous foamed material is obtained by sintering and foaming this soda-lime glass.

For example, the light porous foamed material is obtained by pulverizing soda-lime glass with a glass crusher, for example, a pulverizer such as a ball mill, adding a small amount of a foaming agent to the resulting pulverized glass powder, and firing the resulting mixture at approximately 650°C to 980°C (preferably 880°C or so).

The light porous foamed material of soda-lime glass can be used in small crushed pieces in order to be more usable for a plant growth material, and in order to be made easier to mix with a fertilizer composed of chicken manure, cow manure, swine manure, or another kind of livestock manure. In addition, it is possible to use also powder generated when the light porous foamed material is crushed.

In this Example, a light porous foamed material crushed to approximately 10 mm is used, considering easier use for a plant growth material.

The fertilizer composed of chicken manure, cow manure, swine manure, or another kind of livestock manure contains nitrogen (N), phosphoric acid (P), and potassium (K) that are fertilizer components for a plant growth material. As the fertilizer, a commonly available fertilizer can be used.

For example, in a case where chicken manure is used, chicken manure obtained from a poultry farm, and dried to contain moisture at 5 to 10% is used.

In this case, the dried chicken manure can be used in pellets form. In the same manner, cow manure, swine manure, or another kind of livestock manure can be used in pellets form.

In this regard, the moisture content does not necessarily need to be 5 to 10%, and only needs to make the fertilizer easy to mix with the light porous foamed material of soda-lime glass.

With reference to an example in which chicken manure is used as the fertilizer, an Example in which the fertilizer is mixed with a light porous foamed material to produce a plant growth material will be described below.

A light porous foamed material crushed to approximately 10 mm and chicken manure are mixed at a volume ratio of 90:10 to 10:90.

This volume ratio can be suitably changed, depending on the crop to be fertilized.

The chicken manure to be used is chicken manure dried to contain moisture at 5 to 10%.

The chicken manure is introduced, for example, into a container containing a light porous foamed material. The chicken manure and the light porous foamed material are stirred and mixed to a degree to which no unevenness remains in the container.

The light porous foamed material mixed with the chicken manure is heated at 200 to 900°C.

These heating temperature and heating time can be changed, depending on the fertilizer (chicken manure, cow manure, swine manure, or another kind of livestock manure) to be used.

The container to be used for mixing the chicken manure and the light porous foamed material preferably has a hole for the inflow and outflow of air and the discharge of moisture.

Through this hole of the container heated, moisture is evaporated, and also ammonia is evaporated.

The purpose of the heating step in this Example is not to fire the mixture of the chicken manure and the light porous foamed material until the mixture has no smell. The purpose is the following: to evaporate moisture and ammonia contained in the fertilizer that is composed of chicken manure, cow manure, swine manure, or another kind of livestock manure, and is mixed with the light porous foamed material, and burn off foreign matter other than the fertilizer; and to soften the light porous foamed material, which is thereby allowed to take in the fertilizer mixed, bringing about a state in which the fertilizer is supported in the light porous foamed material.

The state in which the fertilizer is supported in the light porous foamed material is different from the state in which the fertilizer is simply carbonized.

For example, chicken manure, if carbonized, becomes what is called charcoal, and results in having no smell, but has low strength, and easily falls apart. In contrast, the light porous foamed material containing the fertilizer supported therein has high strength, and does not allow the fertilizer supported in the light porous foamed material to be separated from the light porous foamed material.

Over a long period of time, the fertilizer components are stably eluted together with silicon in the form of metasilicate ions (SiO32-), making it possible to have a valid effect on the development and growth of a plant and on an increase in the yield of the plant.

Accordingly, the present invention is different from simply attaching a fertilizer to the surface of a light porous foamed material, and heating the resulting product to produce a plant growth material.

Accordingly, the term "support" in the present invention is used to mean that, maintaining porosity without exceeding a melting point (i.e., without being melted), soda-lime glass as a raw material for a light porous foamed material is burnt in a softened state (i.e., at more than a softening point), whereby the soda-lime glass is integrated with the chicken manure burnt.

In addition, a plant growth material according to the present invention can be produced in different forms, depending on the mixing ratio of the fertilizer and the light porous foamed material, and on a difference in the burning temperature, as follows.

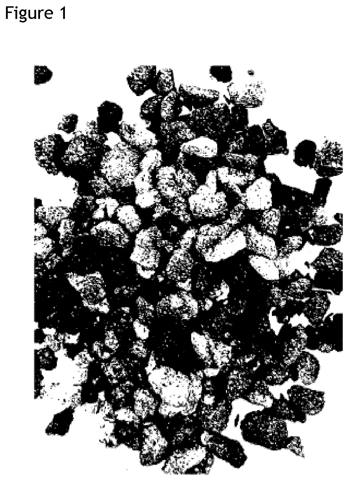

For example, the plant growth material illustrated in the photograph in FIG. 1 is a first Example in which a fertilizer and a light porous foamed material were mixed at a ratio of 50:50, and burnt at approximately 350°C.

Moisture and ammonia that were contained in the fertilizer were evaporated, and foreign matter other than the fertilizer was burnt off, but much of the fertilizer was found not supported inside the light porous foamed material, but attached to the light porous foamed material.

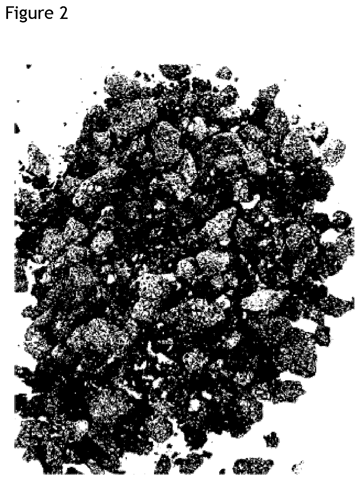

For example, the plant growth material illustrated in the photograph in FIG. 2 is a second Example in which a fertilizer and a light porous foamed material were mixed at a ratio of 50:50, and burnt at approximately 450°C.

Moisture and ammonia that were contained in the fertilizer were evaporated, and foreign matter other than the fertilizer was burnt off. Besides, some of the fertilizer was found supported inside the light porous foamed material, but the ratio of the fertilizer supported is not large.

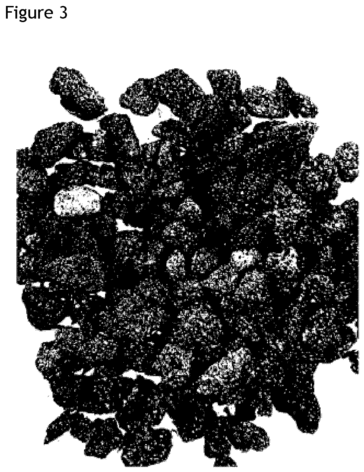

For example, the plant growth material illustrated in the photograph in FIG. 3 is a third Example in which a fertilizer and a light porous foamed material were mixed at a ratio of 70:30, and burnt at approximately 650°C.

Moisture and ammonia that were contained in the fertilizer were evaporated, and foreign matter other than the fertilizer was burnt off. Besides, the fertilizer was completely supported inside the light porous foamed material.

That is, a plant growth material according to the present invention is produced by mixing a light porous foamed material of soda-lime glass and a fertilizer (chicken manure, cow manure, swine manure, or another kind of livestock manure) at a volume ratio of 90:10 to 10:90, and heating the resulting mixture at high temperature. The fertilizer, maintaining porosity, is supported in the light porous foamed material.

Accordingly, even if a plant growth material according to the present invention is placed into water or wetted with rainwater, the fertilizer that is composed of chicken manure, cow manure, swine manure, or another kind of livestock manure, and is mixed in and heated does not flow out of the plant growth material. In addition, a smell peculiar to the fertilizer is generated neither from the plant growth material itself, as a matter of course, nor from a soil fertilized with the plant growth material.

## Claims

1. A plant growth material comprising:
a light porous foamed material obtained by sintering and foaming soda-lime glass; and
a fertilizer composed of chicken manure, cow manure, swine manure, or another kind of livestock manure;
wherein the fertilizer is supported in the light porous foamed material softened by heating at high temperature.

2. A plant growth material comprising:
a light porous foamed material obtained by sintering and foaming soda-lime glass; and
a fertilizer composed of chicken manure, cow manure, swine manure, or another kind of livestock manure;
wherein the fertilizer is supported in the light porous foamed material softened by heating at a high temperature of 200 to 900°C.

3. A method of producing a plant growth material comprising:
a light porous foamed material obtained by sintering and foaming soda-lime glass; and
a fertilizer composed of chicken manure, cow manure, swine manure, or another kind of livestock manure;
the method comprising:
mixing the fertilizer and the light porous foamed material at a volume ratio of 10:90 to 90:10; and
heating the light porous foamed material mixed with the fertilizer at a high temperature of 200 to 900°C to soften the light porous foamed material and to allow the fertilizer to be supported in the light porous foamed material softened.
